# EUROPEAN PATENT SPECIFICATION

(11) **EP 0 335 599 B1**
(45) Date of publication and mention of the grant of the patent: **03.11.1993**
(21) Application number: 89302919.9
(22) Date of filing: 23.03.1989
(51) Int. Cl.: H02P 7/628

(54) **Inverter speed control unit**
Geschwindigkeitsregelgerät mit einem Umrichter
Appareil de réglage de vitesse muni d'un inverseur

(30) Priority: 30.03.1988 JP 76986/88
(43) Date of publication of application: 04.10.1989
(73) Proprietor: OTIS ELEVATOR COMPANY, Farmington, CT 06032 (US)
(72) Inventor: Doi, Kazuhiko, Narita-shi Chiba-ken (JP); Yamada, Koji, Shinagawa-ku Tokyo (JP)
(74) Representative: Tomlinson, Kerry John

(56) References cited:
- GB-A- 2 159 353
- PATENT ABSTRACTS OF JAPAN Vol. 9, no. 147 (E-323) (1870), 21 June 1985; & JP-A- 6028796.
- PATENT ABSTRACTS OF JAPAN Vol. 11, No. 27 (E-474)(2474) 27 January 1987; & JP-A-61196795.
- IEEE INDUSTRY APPLICATIONS SOCIETY ANNUAL MEETING, PART I 18-230October 1987, pages 262-268, Atlanta Georgia; USA; R.S. Colby et al.: " An efficiency optimizing permanent magnet synchronous motor drive "

## Description

The present invention relates to a control unit of a voltage control-type inverter and, more particularly, to a speed control unit for controlling the amount of torque boost in accordance with the magnitude of a load.

When an induction motor is driven by a PWM voltage control-type inverter, the ratio F/V of the output frequency F of the inverter to the output voltage V thereof is controlled to be constant.

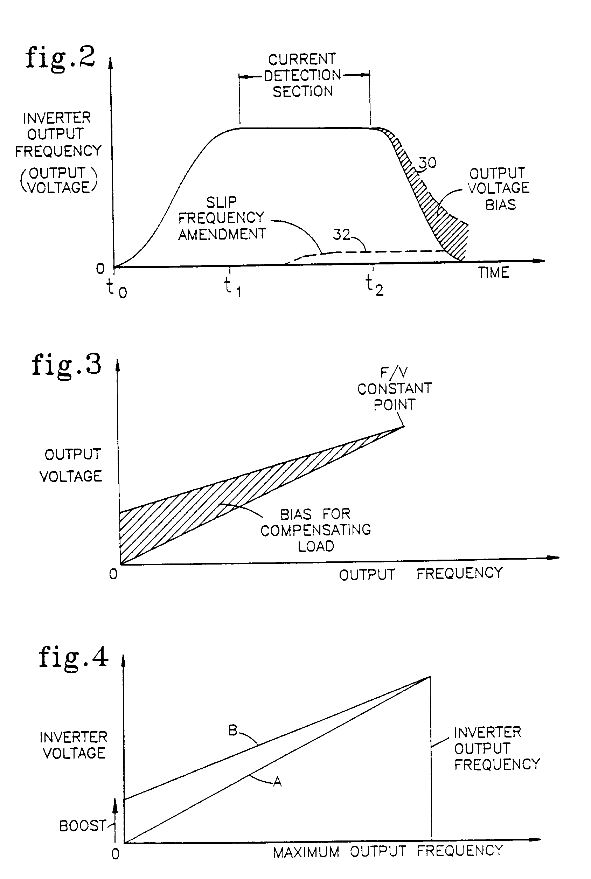

GB 2159353 discloses an inverter control system for improving the torque characteristics of an induction motor wherein a current inputted to the induction motor is continuously detected and the output voltage of the inverter is corrected according to a variation in the detected current. The corrected voltage is added to the output from a voltage to frequency ratio circuit to control a PWM generator for determining the timing to switch a switching element in the inverter. When driving a motor at a slow speed, however, the large load the motor requires may not be driven if the inverter has a low output voltage. In general, in this case, the so-called torque boost provides a higher output voltage in the area having a lower inverter output frequency than the line A showing a constant F/V ratio, as shown in the prior art boosted line B characteristic in Fig. 4. As a result, sufficient torque can be obtained even in the slowing-down driving area.

When driving an induction motor, the output torque of a motor rotating at a low speed set by the torque boost is kept constant if the load is changed, and therefore causes a problem in that the ratio of exciting current to torque current is changed depending upon the change in load. As a result, for example, if the value set by the torque boost is applied to an inverter for an elevator to be controlled in an open loop, the following problems are caused. That is, when a slip frequency is computed from the load torque detected for keeping the speed of an elevator cage constant irrespective of the magnitude of load so as to amend an output frequency, it is very difficult to keep the speed of the cage constant irrespective of the load since the torque boost provides an improper output voltage for an inverter, and therefore the slowing-down distance is not kept constant. An object of this invention is to eliminate such a problem.

According to the present invention there is
a speed control system for a voltage control-type inverter for controlling an induction motor in an open loop, comprising:
means for converting a sensed current flowing through the inverter into a torque signal indicative of the load on the induction motor;
said system further including a torque boost setting means;
wherein the torque boost setting means is responsive to said torque signal for providing a torque boost set signal having a magnitude which varies according to the magnitude of said torque signal; and
an output voltage controller; for adding said variable torque boost set signal to a voltage command signal; characterized in that said sensed current to be converted into said torque signal is sensed during a stable period when the output frequency or the output voltage of the said inverter is substantially constant.

This invention serves to adjust the slip frequency corresponding to the load torque in the high-speed constant running state of a motor and add the voltage corresponding to the adjustment to an output voltage when the motor is decelerated while keeping the adjustment constant.

As identified above, the present invention detects the load torque of the induction motor from the current detected flowing through the inverter and controls the slip frequency and the output voltage corresponding to this load torque. It can thus control the speed to compensate for the influence of the load even in a voltage-type inverter controlled in an open loop. Furthermore, when the slip frequency and an output voltage are controlled when driving at the low speed the slowing-down distance is kept constant irrespective of the magnitude of the load. The elevator is thus allowed to reach the floor with great precision. Moreover, since the software itself enables the slowing-down distance to be kept constant without having to add special hardware, the efficiency is enhanced with little cost being added.

These and other objects, features and advantages of the present invention will become more apparent in light of the following detailed description of an exemplary embodiment thereof.

### Brief Description of the Drawing

Fig. 1 is a block diagram showing one embodiment of the present invention;
Fig. 2 shows one output voltage pattern of an inverter;
Fig. 3 shows an output voltage-output frequency characteristic for describing the compensated voltage corresponding to load; and
Fig. 4 is an explanatory graph for torque boost.

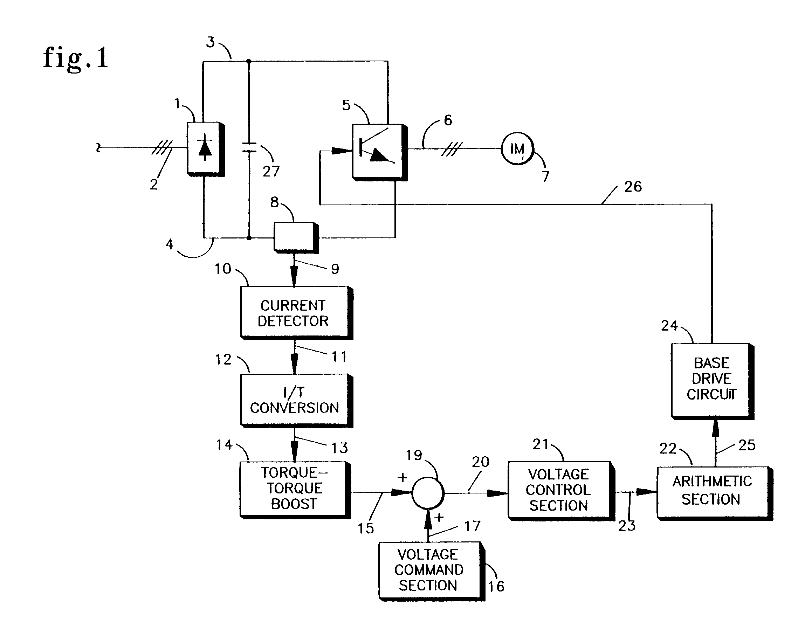

Fig. 1 is a block diagram showing an embodiment of the present invention. A rectifier 1 converts alternating current on a line 2 into direct current on lines 3 and 4, being of positive and negative polarities, respectively. An inverter 5 converts the direct current on lines 3 and 4 into alternating current on a three phase line 6 to be supplied to an induction motor 7. A current sensor 8 provides a sensed current signal on a line 9 to a detector 10 for providing a load current signal on a line 11 to a conversion section 12 for converting the current signal on line 11 indicative of load current into a signal on line 13 indicative of torque for the induction motor. A conversion setting section 14 converts the torque signal on line 13 into a signal on line 15 having a magnitude set as required for torque boost. A voltage command section 16 provides a signal on a line 17 having a magnitude dictated in order to keep the F/V ratio constant. The command signal on line 17 and the torque boost-set signal on line 15 are added in an adder 19 for applying a summed signal on a line 20 to an output voltage control section 21. An arithmetic section 22 of a microcomputer is responsive to an output signal on a line 23 from the voltage control 21, as well as a frequency command signal (not shown). PWM arithmetic processing is executed in the arithmetic section in response to the frequency command signal and the output signal on line 23 being a boosted voltage command signal. A base drive circuit 24 is responsive to an arithmetic section output signal on a line 25 for providing base drive signals on a line 26 to the switching devices in the inverter 5. A smoothing capacitor 27 is utilized between positive and negative output lines 3, 4 of the rectifier in order to smooth the DC output thereof.

The operation of the embodiment of the present invention arranged as above is described hereinafter.

Fig. 2 shows an example of the pattern of an output frequency (or an output voltage) against time provided when an inverter is applied for driving an elevator. At time t₀, the inverter 5 is started. From the time t₀ to t₁, the output frequency of the inverter is rising on the basis of a pattern command sent from the arithmetic section 22, so that the induction motor 7 and hence an elevator cage is kept accelerating. The current sensor 8 and detector 10 detect the current flowing through the D.C. circuit of the inverter 5, but the current detector 10 output signal on line 11 for the detected current during this period is not utilized by the torque boost circuit 14. That is, the inverter 5 is controlled through a base drive circuit 24 by a pattern signal sent from the arithmetic section regardless of load. The microcomputer takes samples of voltage or frequency to determine whether or not a voltage or frequency pattern or profile signal output from a memory (not shown) is correctly output as shown in time t₀ to t₂ in Fig. 2 and compares a previously sampled value with a current value. Hence, when the sampled values in sequence have provided no change, in other words, when the elevator cage runs at the constant high speed, the arithmetic section 22 supplies a fetching command for load current to the conversion section 12. Thus, during a selected sampling period within the period t₁ to t₂, during which speed has stabilized, the arithmetic section 22 serves to perform sampling on the load current. The conversion section 12 converts the fetched load current signal on line 11 to indicate the torque of the induction motor by way of the torque signal on line 13. The torque boost signal on line 15 is added to the value set by the voltage command section 16 in the addition section 19 and the summation is then provided to the arithmetic section 22 by way of the output voltage control section 21. The arithmetic section 22 thus adjusts the slip frequency corresponding to the load torque in the state under which the elevator cage runs at a high constant speed and then controls the inverter 5 on the basis of the amendment.

At the time t₂, a sequence circuit (not shown) outputs a slowing-down command. Then, the conversion section 12 stops fetching the load current. As shown by a dotted line 30 in Fig. 2, the voltage corresponding to a slip amendment 32 is added sequentially when the elevator cage is slowed down in accordance with the slip amendment constant of line 32.

The oblique lines shown in Figure 3 indicate the bias for adjusting load, by which the output voltage pattern of the inverter is adjusted as shown by the oblique lines in Figure 2.

## Claims

1. A speed control system for a voltage control-type inverter for controlling an induction motor (7) in an open loop, comprising:
means (8-12) for converting a sensed current flowing through the inverter into a torque signal indicative of the load on the induction motor (7);
said system further including a torque boost setting means (14);
wherein the torque boost setting means (14) is responsive to said torque signal for providing a torque boost set signal (15) having a magnitude which varies according to the magnitude of said torque signal; and
an output voltage controller (19,21) for adding said variable torque boost set signal (15) to a voltage command signal (17); characterised in that said sensed current to be converted into said torque signal is sensed during a stable period when the output frequency or the output voltage of the said inverter is substantially constant.

2. The speed control system of claim 1 wherein said output voltage controller includes
summing means (19), responsive to said voltage command signal (17) and to a torque boost set signal (15), for adding said voltage command signal and said torque boost set signal for providing a summed signal for controlling the voltage output of the inverter; and wherein
said torque boost means (14) is responsive to a torque signal (13) having a magnitude indicative of load on the motor, to provide said modified torque boost signal.

## Patentansprüche

1. Drehzahlregelsystem für einen spannungsgesteuerten Wechselrichter zum Steuern eines Asynchronmotors (7) in einer offenen Schleife, umfassend:
eine Einrichtung (8-12) zum Umsetzen eines abgetasteten, durch den Wechselrichter fließenden Stroms in ein Drehmomentsignal, welches kennzeichnend für die auf den Asynchronmotor (7) wirkende Last ist;
wobei das System außerdem eine Drehmomenterhöhungs-Einstelleinrichtung (14) aufweist;
wobei die Drehmomenterhöhungs-Einstelleinrichtung (14) auf das Drehmomentsignal anspricht, um ein Drehmomenterhöhungs-Stellsignal (15) bereitzustellen, dessen Stärke sich nach Maßgabe der Stärke des Drehmomentsignals ändert; und
einen Ausgangsspannungsregler (19, 21) zum Addieren des veränderlichen Drehmomenterhöhungs-Stellsignals (15) auf ein Spannungsvorgabesignal (17); dadurch gekennzeichnet, daß der abgetastete, in das Drehmomentsignal umzuwandelnde Strom während einer stabilen Zeitspanne abgetastet wird, in welcher die Ausgangsfrequenz oder die Ausgangsspannung des Wechselrichters im wesentlichen konstant ist.

2. Drehzahlregelsystem nach Anspruch 1, bei dem der Ausgangsspannungsregler umfaßt:
eine Summiereinrichtung (19), die auf das Spannungsvorgabesignal (17) und ein Drehmomenterhöhungs-Stellsignal (15), anspricht, um das Spannungsvorgabesignal und das Drehmomenterhöhungs-Stellsignal zu addieren und ein summiertes Signal zum Steuern der von dem Wechselrichter abgegebenen Spannung bereitzustellen; und wobei die Drehmomenterhöhungseinrichtung (14) auf ein Drehmomentsignal (13) mit einer für die Last des Motors kennzeichnenden Stärke anspricht, um das modifizierte Drehmomenterhöhungssignal bereitzustellen.

## Revendications

1. Système de commande de la vitesse pour un onduleur du type commandé par une tension, servant à commander un moteur à induction (7) en boucle ouverte, comprenant :
des moyens (8-12) servant à convertir une intensité captée qui traverse l'onduleur en un signal de couple indicatif de la charge appliquée au moteur à induction (7);
ledit système comprenant en outre des moyens (14) de réglage du renforcement du couple ;
dans lequel les moyens (14) de réglage du renforcement de couple répondent audit signal de couple en émettant un signal de réglage de renforcement de couple (15) ayant une valeur qui varie en fonction de la valeur dudit signal de couple ; et
un contrôleur (19,21) de tension de sortie servant à ajouter ledit signal variable de réglage de renforcement de couple (15) à un signal d'ordre de tension (17); caractérisé en ce que ladite intensité captée qu'il s'agit de convertir en ledit signal de couple est captée pendant une période stable où la fréquence de sortie ou la tension de sortie dudit onduleur est sensiblement constante.

2. Système de commande de vitesse selon la revendication 1, dans lequel ledit contrôleur de tension de sortie comprend :
des moyens additionneurs (19) qui répondent audit signal (17) d'ordre de tension et à un signal de réglage de renforcement de couple (15) en ajoutant ledit signal d'ordre de tension et ledit signal de réglage de renforcement de couple pour donner un signal additionné servant à commander la sortie de tension de l'onduleur,
et dans lequel lesdits moyens de renforcement de couple (14) répondent à un signal de couple (13) ayant une valeur indicative de la charge du moteur en fournissant ledit signal de renforcement de couple modifié.
